Europäisches Patentamt

(19) European Patent Office

Office européen des brevets

(11) Publication number: **0 067 252**
**B1**

(12) **EUROPEAN PATENT SPECIFICATION**

(45) Date of publication of patent specification: **25.09.85**

(51) Int. Cl.⁴: **C 04 B 41/88, C 04 B 37/00**

(21) Application number: **81302535.0**

(22) Date of filing: **08.06.81**

(54) Metal, carbon, carbide and other compositions thereof, alloys and methods for preparing same.

(43) Date of publication of application:
**22.12.82 Bulletin 82/51**

(45) Publication of the grant of the patent:
**25.09.85 Bulletin 85/39**

(84) Designated Contracting States:
**AT BE CH DE FR GB IT LI LU NL SE**

(56) References cited:
GB-A-1 447 356
US-A-1 098 794
US-A-2 929 741
US-A-3 484 210
US-A-3 747 173
US-A-3 860 443

CHEMICAL ABSTRACTS, vol. 55, no. 20,
November 15, page 340, abstract 148015j,
COLUMBUS, OHIO (US) A.S. VLASOV et al.:
"Study of the conditions for coating carbon
fibers with carbides"

(73) Proprietor: **ADVANCED TECHNOLOGY INC.**
**117 Cedar Lane**
**Englewood New Jersey 07621 (US)**

(72) Inventor: **Intrader, Joseph, Dr.**
**125 Dermerest Avenue**
**Englewood Cliffs New Jersey 07632 (US)**
Inventor: **Bertoldo, Gene**
**306 W. 51 Street**
**New York New York (US)**

(74) Representative: **Ritter, Stephen David et al**
**Mathys & Squire 10 Fleet Street**
**London EC4Y 1AY (GB)**

Courier Press, Leamington Spa, England.

## Description

The invention relates to composites comprising a base or substrate and an adherent coating film or layer comprising tin, lead, indium or a tin alloy, a lead alloy or an indium alloy.

### Disclosure of the background of the invention

Carbon which, in general, and for the purposes of present disclosure, includes graphitic materials, and can range from the highly graphitic types of carbon to low temperature (1000°C) baked carbonaceous articles, carbon fibres and diamond, possesses properties which make it an excellent material for high temperature applications as a substrate material. Moreover, amongst the desirable properties, carbon, such as graphite, possesses good thermal shock resistance, a high sublimation temperature point, and an increase in strength with increasing temperature (up to 2200°C). Carbon, however, tends to oxidize in an oxidizing atmosphere.

In prior practice, a number of carbon composites have been formed and graphite has been coated with a number of combinations of metals such as chromium, titanium, hafnium, zirconium, vanadium, niobium, tantalum, tungsten and molybdenum. However, it has been found that when graphite has been coated with these carbide or carbonyl forming metals the subsequent deposition of tin results in a dewetting of tin upon the heating of the graphite substrate.

US—A—3,484,210 discloses a solder for forming alloy-coated carbon and graphite members comprising titanium, vanadium and zirconium as a first alloy element, tin as a second alloy element and optionally copper or silver. Formation and use of the alloy takes place in an inert atmosphere. The present applicants have found that such solders do not form a strongly adherent bond to carbon and dewetting occurs on heat cycling.

US—A—3,747,173 concerns the use of an alloy of indium and an active metal such as titanium or zirconium to seal inorganic non-metallic members. The resulting metal/non-metal bond is essentially a physical bond and or reheating, dewetting of the metal from the non-metal would occur.

GB—A—1,447,356 concerns a multistep coating procedure for carbonaceous substrates followed by a heat treatment causing diffusion between the coated layers. Such coatings are however deficient in bond strength and are susceptible to de-lamination.

US—A—2,929,741 describes the formation of carbides on a graphite surface by immersing the graphite in a molten metal comprising certain refractory metals dissolved in tin, lead or bismuth. The procedure is carried out in an inert atmosphere and any metal deposited on the graphite would dewet on heat cycling.

Consequently, the traditional coating elements such as disclosed in the above documents and in U.S. Patents Nos. 3,393,084, 4,104,417, 3,860,443, 2,866,724 and 2,636,856 and even those disclosed and found in U.S. Patent No. 1,098,794 have failed to provide for a composition which would be a non-tin dewetting graphite composite.

### Brief description of the present invention

It has now been found that the metal dewetting of hard to bond substrates such as a graphite and other substrates, is avoided when it is coated with a combination of (i) tin, a tin alloy, lead, lead alloy, and/or indium and indium alloys and (ii) a carbide- or carbonyl-former, which combination has been activated by heating in the presence of carbon monoxide. Tin and tin alloys are the preferred materials. When these metals or alloys are admixed with a carbide or carbonyl former and the coating is effected in a carbon monoxide atmosphere, with graphite or other substrates an intermediate layer of "active" alloy is formed in situ (from admixed powders, or preformed as "active" alloys, as will be explained herein) and unexpectedly and surprisingly, dewetting can be avoided. This effect is a result of a synergistically related interaction of the tin, a tin alloy, lead, a lead alloy, and/or indium and indium alloy, and an element of the carbide or carbonyl forming group, causing a conjoint combination of tin, a tin alloy, lead, a lead alloy, and/or indium or indium alloy with graphite or the other substrates previously recited. The element causing the novel "active" state of the metal is an element which forms metallurgically a carbide and/or a metal which forms a carbonyl, e.g. a metal forming carbides such as chromium, titanium, hafnium, zirconium, vanadium, niobium, tantalum, tungsten, molybdenum and iron; as carbonyl formers, metals such as manganese, nickel, cobalt, iron, etc. are included as carbonyl formers (some of these are also carbide formers). Although the precise reason for the "active" state of the tin etc. alloys with these metals is not known, it has been found that carbon monoxide atmosphere is conducive of producing these "active" metals in alloy forms with the recited group of tin, lead or indium. These alloys could not be obtained previously at all or not in an active form because of phase separation or immiscibility of e.g. the tin-metal combination. One such example is the combination of tin with chromium which cannot be formed by melting due to immiscibility. As now formed from powder form, in carbon monoxide atmosphere, e.g. tin-chromium, it forms alloys which were heretofore unknown for their properties, e.g, in the "active" melting form adhering onto graphite. Other alloy combinations such as tin-vanadium nickel, tin-molybdenum-nickel, tin-chromium-nickel, etc. have been found to display these "active" alloy properties.

These properties allow a composite to be formed which will not dewet upon reheating of the same when tin, a tin alloy, lead, a lead alloy, indium or an indium alloy is further deposited thereon, (as well as thereafter and subsequent to the formation of the novel layer adheringly attached to graphite or the other substrates).

Thus according to one aspect of the invention there is provided a composite comprising at least the following component parts

(a) a base or substrate formed of carbon, diamond, silicon, a carbide, boron nitride, titanium diboride, alumina, zirconia, sapphire or quartz, and

(b) an adherent coating, film or layer on said base or substrate comprising (i) 99 to 60% by weight of tin, lead, indium, a tin alloy, a lead alloy or an indium alloy in combination with (ii) 1 to 40% by weight of a metal which is a carbide- or carbonyl-former,
characterised in that during formation of the bond between the base or substrate and the adherent coating, film or layer components (i) and (ii) are heated in the presence of carbon monoxide whereby said layer is non-dewettable upon heating.

The invention also provides a method of forming a composite as defined above which comprises applying components (i) and (ii) of said coating, film or layer to the base or substrate and heating in the presence of carbon monoxide until said components (i) and (ii) melt and form a discrete layer with a zero or negative angle of contact.

The invention further provides an alloy comprising (i) 99 to 60% by weight of tin, lead, indium, a tin alloy, a lead alloy or an indium alloy in combination with (ii) 1 to 40% by weight of a metal which is a carbide- or carbonyl-former, characterised in that said alloy has been activated by heating in the presence of carbon monoxide and is capable of forming an adherent coating, film or layer on a base or substrate as defined above which is non-dewettable upon heating.

Such alloys may be formed by heating a particulate mixture comprising (i) 99 to 60% of tin, lead, indium, a tin alloy, a lead alloy or an indium alloy in combination with (ii) 1 to 40% of a metal which is a carbide- or carbonyl-former, up to and at the melting point of the mixture in the presence of carbon monoxide and cooling the mixture in the presence of carbon monoxide, carbon monoxide in admixture with an inert gas or in an inert atmosphere of hydrogen and nitrogen.

Thus this invention pertains to carbon, graphite, diamond, silicon metal, quartz, aluminum oxide (alumina), metal carbide etc. composites; more specifically, this invention pertains to composites of tin, lead, indium and alloys of same in a composite with the above materials as substrates. These substrate materials are composites with an adherent layer of tin, lead, indium or alloys of each, in which layer each of the foregoing is in an admixture with at least one carbide or carbonyl former, as metal. This admixture produces by melting and/or dissolving, in a carbon monoxide atmosphere, an "active" alloy which bonds to the above recited substrates. The herein disclosed "active" alloys also appear to be novel alloys as these alloys appear to contravene presently known phase diagrams, e.g. for tin-chromium alloys.

Specifically, this invention pertains to a graphite, carbon, diamond, silicon, silica, e.g. quartz, alumina, sapphire, metal carbide, etc., substrates united with tin or tin alloy, in the "active" alloy form. The conjointly formed composition to produce the "active" alloy, may be a novel alloy composition, the chemical nature of which has not been elucidated, but which, when separately formed, and not in accordance with the present method, would not form an "active" alloy which is capable of forming a tin wettable substrate composite.

Further joining of the "active" alloy coating with compatible alloying or brazeable materials, e.g., copper, molybdenum, nickel, etc., with tin allows the formation of composites such as sandwich composites of various combinations having graphite, diamond, silicon, silica, e.g. quartz, alumina, sapphire, boron nitride, titanium diboride ($TiB_2$) metal carbide, etc., as substrates, with tin and a metal alloyable with tin forming the joint, in various sandwich arrangements of the above materials. Still further, instead of tin, as the preferred metal, alloys of the tin are next most desirable and are within the scope of this invention, such as alloys of tin and lead. Moreover, lead and/or indium, instead of tin, are also practicable as base metals for forming the mentioned composites. The "active" alloy forms are then based on tin, lead, or indium or their alloy.

Additionally, preforms of tin, lead, indium metals, alloys of tin, lead and indium and a carbide or carbonyl former such as chromium, nickel, vanadium etc., have been obtained, which when cast and shaped, can then be used in shapes such as discrete elements, e.g. shims, foils or leaves placed on or interleaved with graphite, silicon, silica, diamond, quartz, alumina, sapphire, metal carbide, etc. and, upon heat fusing, joined to said substrates to provide a composite for soldering or joining or fusing the composite to other substrates, e.g., graphite and/or silicon. As part of the present invention, metallurgically "active" metals, which form apparently atomically bound composites, have been discovered that, upon deposition on the above recited substrates, will have, such as to for tin-lead-chromium alloy, zero or negative angles of wetting of said substrates. Graphite composites that have been formed with tin and copper can withstand repeated heating to 550°C and quenching, without noticeable weakening in the formed bond. The disclosed "active" alloy, the precursor components and substrate materials are also useful in particulate form for making various shapes thereof such as abrasives (abrasive wheels) or composite abrasive wheels.

Thus, it has been found that when graphite or the other substrates have been coated and a composite formed with tin, a tin alloy, lead, a lead alloy and/or indium and an indium alloy (hereafter collectively the "tin group" metals), in combination with the carbide or carbonyl forming elements of the above recited group of compounds (but only upon a conjoint deposition or proper "active" alloy preform formation), and then this composite joined such as with tin or a tin alloy coating or layer, lead or lead alloy coating or layer, on carbon or graphite and/or the other substrates, these form the "active" alloys upon heating at an appropriate temperature, e.g., up to 1000°C in a carbon monoxide atmosphere, a non-dewettable carbon or graphite (and/or the other substrate), composite. Subsequent brazing of, e.g., tin with other metals, such as copper or nickel, provides a number of possible composites or sandwiches of, e.g. graphite structures.

Of the carbide or carbonyl forming elements, chromium, titanium, hafnium, zirconium, vanadium, niobium, tantalum, tungsten, molybdenum, nickel, iron, cobalt, or manganese, are used as metals, and when admixed in combination with tin in a colloidal dispersion (the carbide or carbonyl former metal is up to 10% to 15% metal to tin in the mixture but may be as low as 1%, but typically 5%, such as for chromium, iron, nickel, etc.), and subsequently heated up to about, at or above 1000°C in a carbon monoxide atmosphere, the carbide forming or carbonyl forming metal and tin will, apparently, "react" with each other or with a graphite. The formed coating will not dewet and will not dewet upon subsequent deposition of a tin coating thereon, and will not dewet when the substrate and deposit are heated. When the coating is formed, zero or negative angle of wetting characterizes these coatings with their substrate.

When one or more than one of the carbide or carbonyl forming metals is used, these compositions will have the "tin group" metals as low as the solubility in carbon monoxide atmosphere will permit, but typically from about 1%, but 2.5% to about 15%, or as much as 20% to 30% may be used of the carbide or carbonyl former (as metal), the balance being the "tin group" metal; the middle range of 2.5% to 15% is more typical. Further, heating the composite at a lower temperature, e.g., 600°C to 900°C with a copper overlay forms a bronze composite on graphite which withstands higher temperatures, e.g. 700°C to 800°C. Substantially the entire surface of graphite may be coated and oxidation of graphite thus prevented by the less oxidizable coating.

Although the exact mechanism or reasons for this phenomenon are not known, the surprising synergistic interaction is believed to be the following. When, e.g. graphite and tin compete for atomic attraction for the carbide or carbonyl forming elements such as chromium, a film of intimately distributed tin and chromium regions are evenly dispersed on graphite. Whether the continuous film is a composite or a bound intermetallic composition of chromium, tin and graphite, it is not known. However, subsequent heating of this film or a further tin coating on this film does not cause tin dewetting on the graphite.

A tin coating, therefore, when subsequently deposited on the conjointly deposited composition is bound in some form to it and apparently graphite and thus provides a strongly adhering and satisfactorily functioning graphite composite.

Thus, when the graphite composite is first formed with such a film as described above and subsequently additional layers of tin are coated thereon, tin may be deposited at any thickness without dewetting thereof.

Surprisingly, it has also been found that a very highly adherent joint or interface can be formed, not only between tin and carbon as described above, but also between lead and indium and alloys thereof, and the above metal mixture, e.g., lead and chromium mixture with graphite (at about the same proportions as given for tin and the metal), and thereby provide desirable composites which are more inert to oxidizing atmosphere.

Still more surprisingly, it has been found that the above "active" metals formed in-situ or as preforms when deposited on many very hard to coat materials such as the recited substrates, form a tightly adhering coating which is believed to be atomically bound to the substrate. Bond strengths of heretofore unknown magnitude have been observed which tends to support the "atomic" bond interpretation of these results.

Other metals besides chromium which have been usefully joined in the above combination of tin-metal-graphite are vanadium and titanium. Further examples will be given below.

The group of carbonyl or carbide formers which are useful because of their availability, are chromium, manganese, molybdenum, vanadium, tungsten, iron, cobalt, or nickel. Other, but cost wise not as advantageous, carbonyl or carbide formers are rhenium, ruthenium, rhodium, osmium and iridium. Besides the above mentioned carbide formers, zirconium, hafnium and tantalum are also mentioned, but cost wise are not desirable because these are very expensive. Because of toxicity, nickel or iron carbonyls are dangerous and extreme caution must be exercised in use, although these function for the alleged purpose and may not necessarily form carbonyls under the process conditions. The high temperature atmosphere at which the interface is formed is a carbon monoxide atmosphere. Powder form of the tin metals and the carbide and carbonyl formers, as metals, is believed to facilitate the carbon monoxide access in the unknown reaction, forming the "active" alloys. Powder sizes are not restrictive but can vary from colloidal to particulates of up to 2 or 3 millimeters.

Any metal which has a sufficient solubility in the interface composite can thereafter be alloyed with the interface deposit. Those alloying metals capable of increasing (or decreasing) temperature limits are desirable, depending on the purpose, e.g., for lower or higher temperature solder for higher temperature reinforcement such as copper (for bronze formation), etc.

General Example

A. Direct film or layer formation

A method of codeposition of tin, lead or indium alloys or alloyable mixtures thereof, was achieved by the use of colloidal suspension of a powder of tin, lead, indium or alloys of each, and an element which is a carbide or carbonyl former such as of the group recited above. As a dispersant, for the colloidal suspension of these components, alcohol, water, or any fast drying liquid has been employed. Although it is not known if residual water content, the oxygen thereof, or the oxide film, of any, contribute to the formation of the film layer, it has been found that employment of the colloidal suspension with the variation of tin, lead or indium and at least one carbide or carbonyl former in the ratio, such as from 99% to 1%, typically about 95% to 5%, further 85% to 15%, 80% to 20% and 60% to 40% by weight gives the "active" form of the admixture resulting in the "active" alloy. The carbide or carbonyl former with tin, lead, indium, or alloy composition of each (the "tin metal" group), will form a interlayer element or film or coating which has the necessary affinity to the carbon surface, or to the other substrates, giving the non-dewettable layer. Subsequent coating thereon of tin, lead, indium or alloys of each or other brazeable alloy combinations is then readily accomplished.

As a general practice, the carbon or substrate shape is immersed in this colloidal suspension and then air dried. Subsequent annealing in a carbon monoxide atmosphere at the temperature from 600°C and above 1000°C (but depending on the carbide or carbonyl forming element chosen, may be as high as 1500°C) produces the film which has been found so suitable for allowing subsequent additional tin, lead or indium coatings on the, e.g. carbon substrate.

Typically chromium-tin mixtures of various proportions were annealed at 800°C, 900°C and 1000°C in carbon monoxide.

When changing the ratios of, for example, tin and chromium powders and varying the amount of the liquid, various thicknesses of the initial film may be obtained which then can be overcoated with tin. A coating is generally of a thickness sufficient to cover the surface and generally is from about a few microns up to a sufficient thickness to provide the desired properties—1/2 mil (12,7 µm) under most circumstances will be sufficient. A carbon surface prepared as above was able to receive additional amounts of tin, lead or indium or alloyable deposits thereon in one or more steps.

When following the example given above, the following combinations of substrates and "active" alloy coatings were formed at the indicated conditions; alumina (aluminum oxide) or sapphire (single crystal aluminum oxide), with 80% tin, 10% vanadium, 10% nickel, in carbon monoxide atmosphere (100% CO) at about 1000°C; quartz with 80% tin, 10% molybdenum, 10% nickel at about 1000°C in CO atmosphere (100%); silicon carbide with 80% tin, 10% chromium, 10% nickel at about 1000°C in CO atmosphere (100%); silicon (metal) with 90% tin, 10% molybdenum, at about 900°C and in carbon monoxide (100%) atmosphere; diamond with 80% tin, 10% nickel, 10% vanadium or 95% tin with 5% iron at 1000°C in carbon monoxide atmosphere.

When boron nitride is used as a substrate, an adherent coating with a substantially void free interface of tin chromium composition, (90% tin—10% chromium in 100% CO atmosphere) forms on the surface of the boron nitride. This composition will not dewet. Similarly to graphite, a copper layer on tin coating thereof will form bronze. In addition to boron nitride, titanium diboride ($TiB_2$) when it is coated with the composition described above, (or when sandwiches with copper are formed with the coating), exhibit excellent structural properties, e.g. strength. Mixtures of boron nitride and $TiB_2$ have been similarly joined with tin and the carbide or carbonyl formers and the various alloys thereof.

In addition to the above exemplification, the carbide or carbonyl formers with tin, lead or indium alloys are possible choices for these substrates. Other metals which may be joined as adherent composites to the above substrates (or previously mentioned substrates), and to tin are e.g. copper and nickel in various proportions, e.g. of the Monel metal type. All percentages herein are by weight, unless otherwise stated.

B. Preform fabrication and composite or sandwich production

It was also found that when tin-alloy, e.g., of 60% tin —40% lead was used and to this composition chromium powder was added in a percent weight range from 15% to 1% but more typically from 10% to 3%, preferably 7 to 5%, and the composition was heated in a carbon monoxide atmosphere in a suitable crucible of quartz or alumina (a carbon crucible may be used but the composition adheres more strongly), an "alloy" is obtained which is malleable, can be rolled or shaped and it does not exude chromium. Heating is at a temperature of 500°C but gradually the temperature is brought up to 900°C to 950°C and held for about 25 minutes in that atmosphere. The time at temperature may be longer or shorter. The "alloy" is held in a protected atmosphere and cooled until it is solidified. Typically, chromium does not form an alloy with tin and lead and it is believed that it is justifiable to call the obtained composite an "alloy" as it can be rolled or shaped. The melting point of a 60—40 tin lead plus 5% chromium alloy is slightly higher than tin.

Subsequently, it was found that when the quartz crucible was used with the composition as indicated in the previous example adherent coatings were formed on the quartz crucible.

After rolling the alloy material, shapes of various configuration were punched out and placed on graphite, carbon or polished silicon slice and heated to a temperature of 950°C in a protected atmosphere of carbon monoxide, or mixtures of carbon monoxide, nitrogen and/or hydrogen (but preferably carbon monoxide); the shape thus placed on the substrate then thoroughly wets the surface (zero or negative angle of contact). The surface is solderable where the shape has been deposited. The deposited preform, when worked up can be used for joining graphite or silicon in sandwich form, as above. For silicon metal, the above illustrated composition can be used or a 90%tin—10% chromium composition employed.

The preform can be joined with copper by merely placing it in contact with Cu in an inert atmosphere. The coating may also be "shaved" and made thinner and a copper leaf or foil placed on to make bronze. Copper "soaks" up tin and raises the melting point of the preform. Of course, copper, when so joined to graphite can also be readily soldered. Variation of time and/or temperature has a definite effect on the migration, i.e., penetration of copper into tin (or tin alloy), both into the graphite or into copper with an increase in the force needed for breaking the copper-tin-graphite bond. These variations are easily established. Generally breaking failure occurs in the graphite substrate.

When the above example is followed, tin-molybdenum, (90% tin—10% molybdenum), alloy is formed and used as a preform alloy such as on silicon metal. When this material was used in a thin sheet (0.003 inches) to join a thin sheet of molybdenum, an electrical current rectifier of silicon-molybdenum was produced. A temperature of about 900°C and carbon monoxide was used in that stage of process. Other composites that were formed were: graphite-tin-chromium (90%—10%) with tool steels; 303 stainless steel; cast iron; low carbon steel, etc.

C. Powder preform fabrication

If the powders of the tin, tin alloy, lead, lead alloy, indium, indium alloy, with the above carbide or carbonyl former are admixed and pressed, i.e., compacted to form "green" porous compacts (or preforms), and the carbon, i.e., graphite or silicon substrate, held in a carbon monoxide atmosphere such as up to 1000°C or lower, e.g. 800°C, then an equivalent or better result is obtained from that given for methods A. or B. above when later forming composites.

Following the above procedure, the following composite film formers were employed for coating on graphite (graphite was available from Dixon Crucible, Bay City, New Jersey): vanadium-tin, titanium-tin, chromium-tin, chromium-lead, and chromium-indium colloidal suspensions.

When a graphite substrate is treated according to the above procedure with the preform "alloy" or green compact and is then subsequently coated with a tin metal and heated, the tin metal will not dewet and ball up on the surface of the graphite.

These coated products were useful, such as for brushes (electrodes) for electrical motors, flat crucibles for growing silicon single crystals from molten silicon. Other composite substrates were formed for bonding metals to graphite to reduce structural brittleness of graphite structures, e.g. for graphite bearings, etc. In the above recited combination, aluminum oxide and sapphire can be used in ceramic heaters and seals, quartz in quartz heaters or for glass to metal seals, etc. Carbides of the above carbide formers, including boron carbide can be used as abrasives (also boron nitride), exceptionally strong bonds are formed with the above recited "active" alloys, such as with silicon carbide.

As a result, abrasives of well known types, e.g. carbides, oxides, e.g. alumina or zirconia and diamonds, can now be formed into various useful shapes for use in abrasive wheels, belts, drill heads, (oil field drilling), etc. Carbon-fibre-metal composites can also be formed (80% tin —10% nickel—10% vanadium), because the tin pre-wetted carbon fibers can now be readily incorporated in other metals, e.g. copper. The same metal reinforced structures may also be formed from whisker carbides, e.g. boron carbides, or whisker oxides, useful for such as, structural load bearing components, e.g. aluminum oxides, zirconium oxides with metals or used for reinforcing, e.g. abrasive wheels.

As a result, dense pyrolytic graphite, graphite, carbon, carbon fiber, etc. structures, or whisker reinforced structures, can now be usefully formed in various shapes having various novel strength properties heretofore unknown.

When the above general example was followed, except that the refractory carbide or carbonyl former was first deposited and then a colloidal layer of tin deposited thereon and the same annealing procedure in a hydrogen atmosphere followed, the intermediate composite would not provide a non-dewetting substrate for tin upon a subsequent deposition of a tin layer thereon. In fact, the tin layer when so deposited, would dewet at an elevated temperature such as 232°C, its melting point. If the same example were followed and tin was deposited in a thin colloidal layer on top of graphite without the carbide or carbonyl former being present and the carbide or carbonyl former thereafter deposited thereon and the annealing procedure followed after each step or after the two depositions, the tin coating, if subsequently deposited on this, thus treated substrate, would again dewet.

As it is evident from the above, the unexplainable synergistic interaction takes place only on the conjoint, powder or colloidal distribution and annealing at high temperatures of a mixture of the refractory carbide or carbonyl former and tin, lead or indium material and in the presence of carbon monoxide.

While a colloidal or powder suspension has been used in the above examples, colloidal suspensions are merely one illustration of a dispersion. Uniform distribution of the coating(s) may also be achieved such as by painting with a vehicle in which suitably the above components are dispersed. Moreover, mixtures of the above carbide or carbonyl formers of various kinds may also be employed in the coating. Further, other dispersion depositions, such as sputtering or vaporizing, may be used for forming the conjoint distribution of tin and carbide former appropriately selected to achieve the desired end result as long as the carbon monoxide atmosphere is present. While the carbon monoxide content in the atmosphere can be less than 100%, it has been found that best results are obtained in a 100% carbon monoxide atmosphere.

As discussed above, various alloys of tin, e.g., tin-lead, and of the other coating formers, i.e., lead and indium may also be used. These alloys must be such that when using the recited carbide or carbonyl formers incompatible, i.e., non-alloying mixtures do not form. A ready test for incompatibility is dewetting of the deposited coating, e.g. on the graphite. Another is the flaking or peeling of the coating which signifies the lack of chemical bond formation between the graphite, i.e. carbon substrate and the coating. This test is also a ready test to establish the active state of the alloy. Another test is the zero or negative angle of wetting of the substrate, e.g. graphite. While these tests may appear functional, the ready means for establishing "activity" should be self evident, especially in a laboratory or in a field test by visual inspection. It is also necessary to work with a dispersion of the carbide former and the deposited component and the alloys, within compatibility regions for the alloy components. These are very complex and therefore are best established by the above tests, e.g., dewetting and peeling or flaking. These tests are best carried out by repeated heating and cooling cycles at progressively higher temperatures. According to the above tests, the composites as disclosed herein behaved satisfactorily. When graphite structures are joined with preforms of the above described "alloys" and the resistance measured between the preform deposit of graphite and alloy, no increase was observed with ordinary type of resistance detectors, i.e., ohmeter which measures in milliohms. This is a test which seems to indicate that carbides are not formed in the "active" alloy formation because carbide formation would indicate an increase in resistance. However, the possibility that some carbide formation may take place has as yet not been established.

Similarly, when graphite structures are joined with preform "alloys" exceptionally strong structural bonds are formed. When preforms are joined to silicon, a very good collecting capacity for silicon cell may be obtained which is not subject to oxidative deterioration. Hence, the life of a silicon solar cell can be increased with less expensive fabrication techniques. When forming the so-called preform "alloys", it was found that when the alloy was not formed in a carbon monoxide atmosphere, e.g. chromium would exude from tin. For example, 5, 10 or 15% chromium, balance tin do not form alloys according to conventional phase diagrams. However, when formed according to the present invention, these elements in the same proportions form "active" alloys. Hence, according to the presnt invention, alloys are made which are believed to be novel and comprise the above "tin group" metals and the carbide and carbonyl formers (as metals). These alloys must be formed in carbon monoxide systems, and preferably from the powder form, although hot pressing and then treating the powders in carbon monoxide, also gives an excellent alloy. Other illustrative species of the heretofore unknown alloys are alloys of tin and molybdenum, e.g. in the range from 5 to 10% molybdenum, balance tin.

Without being bound by any theory, but merely for explanation, it is believed that in carbon monoxide system, chromium, tin, lead or indium, or tin, lead or indium alloys, (as well as the other carbide or carbonyl formers of the above group), synergistically interact to cause one or more of the components, e.g., chromium to form a very active species probably in-situ and in the presence of carbon monoxide, so that the compound or complex when cooled behaves as if it were an "alloy". These compositions are sufficiently "alloyed" so as not to exude or separate out the carbide forming materials, yet these are sufficiently "active" in a reaction sens so as to adhere atomically, (apparently), to carbon, silicon and the other substrates. These various combinations form the tightly adhering coatings, layers and structures providing heretofore non-observed advantages.

**Claims**

1. A composite comprising at least the following component parts:

(a) a base or substrate formed of carbon, diamond, silicon, a carbide, boron nitride, titanium diboride, alumina, zirconia, sapphire or quartz, and

(b) an adherent coating, film or layer on said base or substrate comprising (i) 99 to 60% by weight of tin, lead, indium, a tin alloy, a lead alloy or an indium alloy in combination with (ii) 1 to 40% by weight of a metal which is a carbide- or carbonyl-former,

characterised in that during formation of the bond between the base or substrate and the adherent coating, film or layer components (i) and (ii) are heated in the presence of carbon monoxide, whereby said layer is non-dewettable upon heating.

2. A composite as defined in Claim 1, characterised in that components (i) and (ii) are additionally heated in the presence of carbon monoxide, prior to formation of the bond between the base or substrate and the adherent coating, film or layer components.

3. A composite as defined in Claim 1 or Claim 2, wherein the carbide or carbonyl former is chromium, titanium, hafnium, zirconium, cobalt, iron, nickel, manganese, rhenium, ruthenium, rhodium, osmium, iridium, vanadium, niobium, tantalum, tungsten or molybdenum, or mixtures of same.

4. A composite as defined in Claim 1 or Claim 2, wherein the base structure is graphite.

5. A composite as defined in Claim 1 or Claim 2, wherein the substrate is alumina or sapphire.

6. A composite as defined in Claim 1 or Claim 2, wherein the substrate is a carbide.

7. A composite as defined in Claim 6, wherein the carbide is silicon carbide.

8. A composite as defined in Claim 1 or Claim 2, wherein the substrate is boron nitride, titanium diboride or mixtures of same.

9. A composite as defined in Claim 1 or Claim 2, wherein the substrate is diamond, the carbide former is iron and component 1(b) is tin and the ratio of iron to tin is about 5 to 95.

10. The composite as defined in Claim 1 or Claim 2, wherein the carbide former is chromium.

11. The composite as defined in any preceding claim further comprising an overlay on said coating, film or layer, said layer comprising one of the substrate materials, or a metal alloyable with said coating, film or layer.

12. The composite as defined in Claim 11, wherein the overlay comprises copper, components (i) and (ii) of said coating, film or layer are respectively tin and chromium and said base of substrate comprises graphite.

13. An alloy comprising (i) 99 to 60% of tin, lead, indium, a tin alloy, a lead alloy or an indium alloy in combination with (ii) 1 to 40% of a metal which is a carbide- or carbonyl-former, characterised in that said alloy has been activated by heating in the presence of carbon monoxide and is capable of forming an adherent coating, film or layer on a base or substrate as defined in Claim 1 which is non-dewettable upon heating.

14. A method of forming an alloy as defined in Claim 13 comprising heating a particulate mixture comprising (i) 99 to 60% of tin, lead, indium, a tin alloy, a lead alloy or an indium alloy in combination with (ii) 1 to 40% of a metal which is a carbide- or carbonyl-former, up to and at the melting point of the mixture in the presence of carbon monoxide and cooling the mixture in the presence of carbon monoxide, carbon monoxide in admixture with an inert gas or in an inert atmosphere of hydrogen and nitrogen.

15. A method of forming a composite as defined in Claim 1 which comprises applying components (i) and (ii) of said coating, film or layer to the base or substrate and heating in the presence of carbon monoxide until said components (i) and (ii) melt and form a discrete layer with a zero or negative angle of contact.

16. A method according to Claim 15 wherein said components (i) and (ii) are applied to the base or substrate in the form of performed shaped body of alloy.

**Revendications**

1. Produit composite composé d'au moins les parties constituantes suivantes:

(a) une base ou support ou subjectile formé de carbone, de diamant, de silicium, d'un carbure, de nitrure de bore, de diborure de titane, d'alumine, de zircone, de saphir, ou de quartz, et

(b) une couche, pellicule ou revêtement qui adhère à ladite base, audit support ou audit subjectile, qui se compose (i) de 99 à 60% en poids d'étain, de plomb, d'indium, d'un alliage de l'étain, d'un alliage du plomb ou d'un alliage de l'indium, en combinaison avec (ii) 1 à 40% en poids d'un métal qui est un carburogène ou un carbonylogène,
caractérisé en ce qu'au cours de la formation de la liaison entre la base, le support ou le subjectile et les constituants (i) et (ii) de la couche, pellicule ou revêtement qui adhère, on opère un chauffage en présence de monoxyde de carbone, si bien que ladite couche ne peut plus se démouiller par chauffage.

2. Produit composite suivant la revendication 1, caractérisé en ce que les composants (i) et (ii) sont en outre chauffés en présence de monoxyde de carbone, préalablement à la formation de la liaison entre la base ou le support ou subjectile et les constituants de la couche, pellicule ou revête-ment qui adhère.

3. Produit composite suivant l'une quelconque des revendications 1 et 2, caractérisé en ce que le carburogène ou le carbonylogène est constitué de chrome, de titane, d'hafnium, de zirconium, de cobalt, de fer, de nickel, de manganèse, de rhénium, de ruthénium, de rhodium, d'osmium, d'iridium, de vanadium, de niobium, de tantale, de tungstène ou de molybdène, ou de mélanges de ces éléments.

4. Produit composite suivant l'une quelconque des revendications 1 et 2, caractérisé en ce que la structure de base est constituée de graphite.

5. Produit composite suivant l'une quelconque des revendications 1 et 2, caractérisé en ce que le support est constitué d'alumine ou de saphir.

6. Produit composite suivant l'une quelconque des revendications 1 et 2, caractérisé en ce que le support est constitué d'un carbure.

7. Produit composite suivant le revendication 6, caractérisé en ce que le carbure est du carbure de silicium.

8. Produit composite suivant l'une quelconque des revendications 1 et 2, caractérisé en ce que le support est constitué de nitrure de bore, de diborure de titane ou de mélanges de ces composés.

9. Produit composite suivant l'une quelconque des revendications 1 et 2, caractérisé en ce que le support est constitué de diamant, le carburogène est constitué de fer et le composant 1(b) est constitué d'étain et le rapport du fer à l'étain est d'environ 5 à 95.

10. Produit composite suivant l'une quelconque des revendications 1 et 2, caractérisé en ce que le carburogène est constitué de chrome.

11. Produit composite suivant l'une quelconque des revendications précédentes, caractérisé en ce qu'il comprend un recouvrement sur ledit revêtement, pellicule ou couche, la couche en question comprenant l'une des matières de support, ou un métal alliable audit revêtement, pellicule ou couche.

12. Produit composite suivant la revendication 11, caractérisé en ce que le recouvrement est constitué de cuivre, les composants (i) et (ii) dudit revêtement, pellicule ou couche sont respectivement de l'étain et du chrome et ladite base du support est constituée de graphite.

13. Alliage comprenant (i) 99 à 60% d'étain, de plomb, d'indium, d'un alliage d'étain, d'un alliage de plomb ou d'un alliage d'indium en combinaison avec (ii) 1 à 40% d'un métal qui est un carburogène ou un carbonylogène, caractérisé en ce que l'alliage en question a été activé par chauffage en présence de monoxyde de carbone et est capable d'engendrer un revêtement, pellicule ou couche qui adhère sur une base ou un support ou subjectile tel que défini dans la revendication 1, qui n'est pas démouillable par chauffage.

14. Procédé de formation d'un alliage suivant la revendication 13, caractérisé en ce que l'on chauffe un mélange particulaire comprenant (i) 99 à 60% d'étain, de plomb, d'indium, d'un alliage d'étain, d'un alliage de plomb ou d'un alliage d'indium, en combinaison à (ii) 1 à 40% d'un métal qui est un carburogène ou un carbonylogène, jusqu'à et y compris le point de fusion du mélange, en présence de monoxyde de carbone et on refroidit le mélange en présence de monoxyde de carbone, de monoxyde de carbone en mélange à un gaz inerte ou dans une atmosphère inerte d'hydrogène et d'azote.

15. Procédé de formation d'un produit composite suivant la revendication 1, caractérisé en ce que l'on applique les composants (i) et (ii) dudit revêtement, pellicule ou couche sur la base ou le support et on chauffe le tout en présence de monoxyde de carbone jusqu'à ce que lesdits composants (i) et (ii) fondent et forment une couche distincte avec un angle de contact zéro ou négatif.

16. Procédé suivant la revendication 15, caractérisé en ce que les composants (i) et (ii) s'appliquent sur la base ou le support ou subjectile sous la forme d'un corps façonné préformé de l'alliage.

## Patentansprüche

1. Zusammensetzung, welche wenigstens die folgenden Bestandteile enthält:

(a) ein aus Kohlenstoff, Diamant, Silizium, einem Carbid, Bornitrid, Titandiborid, Aluminiumoxid, Zirkondioxid, Saphir oder Quarz gebildetes Grundmaterial oder Substrat und

(b) einen anhaftenden Überzug, Film oder eine Schicht auf diesem Grundmaterial oder Substrat, welche(r)

(i) 99 bis 60 Gew.-% Zinn, Blei, Indium, einer Zinnlegierung, einer Bleilegierung oder einer Indiumlegierung in Verbindung mit

(ii) 1 bis 40 Gew.-% eines Metalles, welches ein Carbid- oder Carbonylbildner ist, enthält, dadurch gekennzeichnet, daß während der Bildung der Bindung zwischen dem Grundmaterial oder Substrat und dem anhaftenden Überzug, Film oder der Schicht die Komponenten (i) und (ii) in der Gegenwert von Kohlenmonoxid erhitzt werden, wodurch die Schicht beim Erhitzen nicht entnetzbar ist.

2. Zusammensetzung nach Anspruch 1, dadurch gekennzeichnet, daß die Komponenten (i) und (ii) zusätzlich vor der Bildung der Bindung zwischen dem Grundmaterial oder Substrat und dem anhaftenden Überzug, Film oder der Schicht in Gegenwert von Kohlenmonoxid erhitzt werden.

3. Zusammensetzung nach Anspruch 1 oder 2, worin der Carbid- oder Carbonylbildner Chrom, Titan, Hafnium, Zirkonium, Kobalt, Eisen, Nickel, Mangan, Rhenium, Ruthenium, Rhodium, Osmium, Iridium, Vanadium, Niob, Tantal, Wolfram oder Molybdän oder ein Gemisch derselben ist.

4. Zusammensetzung nach Anspruch 1 oder 2, worin die Grundstruktur Graphit ist.

5. Zusammensetzung nach Anspruch 1 oder 2, worin das Substrat Aluminiumoxid oder Saphir ist.

6. Zusammensetzung nach Anspruch 1 oder 2, worin das Substrat ein Carbid ist.

7. Zusammensetzung nach Anspruch 6, worin das Carbid Siliziumcarbid ist.

8. Zusammensetzung nach Anspruch 1 oder 2, worin das Substrat Bornitrid, Titandiborid oder ein Gemisch derselben ist.

9. Zusammensetzung nach Anspruch 1 oder 2, worin das Substrat Diamant, der Carbidbildner Eisen und Bestandteil 1(b) Zinn und das Verhältnis von Eisen zu Zinn ungefähr 5 zu 95 ist.

10. Zusammensetzung nach Anspruch 1 oder 2, worin der Carbidbildner Chrom ist.

11. Zusammensetzung nach einem der vorhergehenden Ansprüche, welche eine Auflage auf dem Überzug, dem Film oder der Schicht aufweist, wobei diese Auflage eines der Materialen des Substrates oder ein mit dem Überzug, dem Film oder der Schicht legierbares Material enthält.

12. Zusammensetzung nach Anspruch 11, worin die Auflage Kupfer enthält, die Komponenten (i) und (ii) des Überzugs, Films oder der Schicht Zinn bzw. Chrom sind und das Grundmaterial oder Substrat Graphit enthält.

13. Legierung, welche (i) 99 bis 60% Zinn, Blei, Indium, einer Zinnlegierung, einer Bleilegierung oder einer Indiumlegierung in Verbindung mit (ii) 1 bis 40% eines Metalles, welches ein Carbid-

oder Carbonylbildner ist, enthält, dadurch gekennzeichnet, daß die Legierung durch Erhitzen in Gegenwert von Kohlenmonoxid aktiviert worden ist und einen anhaftenden, beim Erhitzen nicht entnetzbaren Überzug, Film oder eine Schicht auf einem Grundmaterial oder Substrat nach Anspruch 1 zu bilden imstande ist.

14. Verfahren zur Bildung einer Legierung nach Anspruch 13, welches das Erhitzen eines aus Partikeln bestehenden Gemisches, welches (i) 99 bis 60% Zinn, Blei, Indium, einer Zinnlegierung, einer Bleilegierung oder einer Indiumlegierung in Verbindung mit (ii) 1 bis 40% eines Metalles, welches ein Carbid- oder Carbonylbildner ist, zum und beim Schmelzpunkt des Gemisches in Gegenwart von Kohlenmonoxid und Abkühlen des Gemisches in Gegenwart von Kohlenmonoxid, Kohlenmonoxid in einem Gemisch mit einem Inertgas oder in einer inerten Atmosphäre von Wasserstoff und Stickstoff umfaßt.

15. Verfahren zur Bildung einer Zusammensetzung nach Anspruch 1, welches das Aufbringen der Komponenten (i) und (ii) des Überzugs, Films oder der Schicht auf das Grundmaterial oder Substrat und Erhitzen in Gegenwart von Kohlenmonoxid, bis die Komponenten (i) und (ii) schmelzen und eine getrennte Schicht mit einem Kontaktwinkel von Null oder einem negativen Kontaktwinkel bilden, umfaßt.

16. Verfahren nach Anspruch 15, worin die Komponenten (i) und (ii) auf das Grundmaterial oder Substrat in Form einer geformten Legierungsmasse aufgebracht wird.